Europäisches Patentamt

European Patent Office

Office européen des brevets

(19)

(11) Veröffentlichungsnummer: **0 074 637**
**B1**

(12) EUROPÄISCHE PATENTSCHRIFT

(45) Veröffentlichungstag der Patentschrift :
30.07.86

(21) Anmeldenummer : 82108359.9

(22) Anmeldetag : 10.09.82

(51) Int. Cl.⁴ : **B 65 D 85/52, A 01 G 9/02**

(54) Zwiebelpackung und -treibeinrichtung.

(30) Priorität : 11.09.81 CH 5882/81

(43) Veröffentlichungstag der Anmeldung :
23.03.83 Patentblatt 83/12

(45) Bekanntmachung des Hinweises auf die Patenterteilung : 30.07.86 Patentblatt 86/31

(84) Benannte Vertragsstaaten :
AT BE CH DE FR GB IT LI NL

(56) Entgegenhaltungen :
GB-A-  468 731
US-A- 3 415 012

(73) Patentinhaber : BREVETEAM S.A.
c/o Dr. Paul Stadlin Gartenstrasse 2 Postfach 758
CH-6300 Zug (CH)

(72) Erfinder : Der Erfinder hat auf seine Nennung verzichtet

(74) Vertreter : Lesser, Karl-Bolko, Dipl.-Ing.
European Patent Attorney Johanneskirchnerstrasse
149a
D-8000 München 81 (DE)

## Beschreibung

Die Erfindung betrifft eine Zwiebelpackung.

Unter Zwiebeln sollen sowohl Blumen-, als auch Eßzwiebeln verstanden werden. Diese Packung ist aber auch zum Verpacken und Treiben von Knollen geeignet, die eine ähnliche Form aufweisen, wie die Zwiebeln.

Zwiebeln solcher Art werden gewöhnlich äußerlich trocken, zumeist zu mehreren in Netzen oder Kartons verpackt versandt und verkauft und dann zum Treiben in die Erde gesteckt.

Zum Antreiben der Zwiebeln sind nun schon mehrere davon abweichende Vorschläge gemacht worden. So ist es zum einen bekannt, Zwiebeln nicht in die Erde, sondern in die Bohrungen einer Substratplatte zu stecken, wobei die Zwiebeln dann von der Wurzelseite her befeuchtet werden (DE-U 6 943 062). Nach einem anderen Vorschlag (DE-B 1 014 368) werden die Zwiebeln zwischen zwei Platten gehalten, die einander zugeordnete Bohrungen aufweisen, von deren Rändern die Zwiebeln unten und oben umgriffen werden.

Diese beiden Platten sind in einem wasserdichten Kasten gehalten, wobei der Wasserspiegel beabstandet von der Unterseite der Zwiebel ist.

Beiden Vorschlägen ist gemeinsam, daß die Vielzahl von Zwiebeln an einer einzigen Wasserreservoir angeschlossen sind, weshalb in den diesbezüglichen Behältern auch dort Wasser vorhanden sein muß, wo überhaupt keine Zwiebelwurzeln hinreichen können.

Dies bedingt aber, daß beim Transport der Zwiebeln viel mehr Wasser mittransportiert werden muß, als für das Treiben der Zwiebeln notwendig ist. Darüber hinaus haben diese bekannten Einrichtungen auch aufgrund ihrer Ausbildung ein relativ hohes Gewicht.

Der Erfindung liegt deshalb die Aufgabe zugrunde, eine Zwiebelpackung zu schaffen, bei der der Wasservorrat für die Zwiebeln kleiner gehalten werden kann und die aufgrund ihrer Ausbildung einfacher zu handhaben ist.

Diese Aufgabe wird durch den Gegenstand des Anspruches 1 gelöst. Danach ist mindestens eine Zwiebel in das offene Ende eines einseitig offenen schlauchförmigen Beutels eingesetzt. Der Beutelrand weist am offenen Ende einen kleineren Umfang auf, als der maximale Umfang der Zwiebel in einer zur Zwiebelachse — Wurzeln/Sproß — senkrechten Ebene beträgt. Dazu kann ein kegelstumpfförmiger Beutel benutzt werden, in den die Zwiebel von seinem den größeren Umfang aufweisenden Ende mit dem Sproß voraus hineingeschoben wird, und der dann an dem den größeren Umfang aufweisenden Ende zugeschweißt wird ; die Zwiebel kann aber auch unter Ausnutzung der elastischen Dehnfähigkeit des Beutels in einen eines Endes geschlossenen, im wesentlichen über seine gesamte Länge einen konstanten Umfang aufweisenden Beutel eingeschoben werden, wobei sich der obere Rand des Beutels aufgrund der Elastizität wieder auf seinen ursprünglichen Umfang zusammenzieht, im direkt darunter liegenden Bereich der Beutel jedoch durch die Zwiebel ausgebaucht verbleibt.

Dieser Beutel ist mindestens im Bereich des anderen Endes wasserdicht geschlossen und kann so mit Wasser gefüllt werden, daß die auf dieses andere Ende hin ausgerichteten Wurzeln in das Wasser hineinreichen. Erfindungsgemäß wird somit jeder einzelnen Zwiebel bzw. Zwiebelgruppe ein eigener Wasservorrat zugeordnet.

Wenngleich es sich empfiehlt, jeder Zwiebel einen eigenen Beutel zuzuordnen, können auch, insbesondere bei kleineren Zwiebeln, mehrere, z. B. drei Zwiebeln zusammengefaßt und die daraus gebildete Einheit von dem einen Ende des Beutels umhüllt sein.

Vorzugsweise liegen die von dem einen Ende des Beutels umhüllten Zwiebeln mit ihrer Wurzelseite auf dem Rand einer Öffnung einer Halterung auf, wobei die Beutel diese Öffnung durchdringen und nach unten aufgrund des in ihnen enthaltenen Wassers durchhängen.

Der Beutel besteht vorzugsweise aus einer Kunststoff-Folie, die selbst dehnbar ist, sie kann aber darüber hinaus auch noch Öffnungen, insbesondere Schlitze aufweisen, die ein Ziehen des Beutels über die Zwiebel gestatten. Darüber hinaus können diese Öffnungen, insbesondere Schlitze, auch noch benachbart der Wurzelseite der Zwiebel vorliegen, sodaß dort nicht nur ein Luftaustausch stattfindet, sondern der Beutel auch mit Wasser gefüllt werden kann. Bei Verwendung eines ansonsten dichten Beutels empfiehlt es sich, im Bereich des Wurzelansatzes eine Einzelöffnung für Wasser vorzusehen, in die das Rohrende einer Gießkanne zum Befüllen gesteckt werden kann.

Der mit Wasser gefüllte Beutel hält nicht nur dadurch an der Zwiebel, daß er in ihrem Bereich gedehnt ist, sondern darüber hinaus auch noch dadurch, daß er durch das Gewicht der Zwiebel am Rand der Öffnung der Halterung eingeklemmt wird. Aus diesem Grund sind gemäß einer bevorzugten Ausführungsform der Erfindung die Öffnungen kreisförmig.

Der Wasserspiegel wird dabei so gewählt, daß er von der Zwiebel selbst beabstandet ist, die Wurzeln jedoch in das Wasser hineinragen.

Gemäß einer Ausführungsform der Erfindung, ist die Halterung Teil eines Gestells und weist Abstützungen auf, die sie mindestens so hoch halten, wie der unter ihr befindliche Teil des Beutels lang ist.

Gemäß einer anderen Ausführungsform kann die Halterung aber auch den Deckel eines wasserdichten Kastens bilden, der dann, wenn die Einrichtung an ihrem Bestimmungsort angekommen ist, mit Wasser gefüllt wird. Insbesondere in diesem Falle ist es vorteilhaft, wenn der die Zwiebel umhüllende Beutel auch in dem der Zwiebel direkt benachbarten Wurzelbereich Öffnungen aufweist, sodaß durch Nachfüllen von Wasser in den Kasten auch Flüssigkeit in den Beutel nachlaufen kann.

Vorzugsweise sind die in den Beuteln angeordneten Zwiebeln in einer Transportschachtel gelagert, deren eine Seitenwandung, insbesondere deren Deckel, die Halterung bilden kann. Da die Öffnungen dieser Halterung einen kleineren Durchmesser aufweisen, als die in der Verpackung liegenden Zwiebeln, können diese Öffnungen schon bei der Herstellung der Verpackung ausgestanzt sein. Diese Öffnungen können darüber hinaus noch von einem innenseitig angeordneten Netz verschlossen sein, welches dann beim Einsetzen der in den Beuteln befindlichen Zwiebeln in die Halterung, abgetrennt wird. Diese Öffnungen können aber auch durch vorzugsweise ringförmige Schwachstellen in dem Deckel gekennzeichnet sein und dann erst später ausgebrochen werden.

Der Beutel kann aber auch sowohl an seinem oberen Rand, als auch am unteren Ende der durch die Zwiebel bewirkten Ausbauchung zusammengeschnürt sein, wobei diese Schnur eine freie Schlaufe bildet, an der der Beutel mitsamt der Zwiebel aufgehängt werden kann. Hierbei empfiehlt es sich, den oberen Rand des Beutels schlaufenförmig umzulegen, sodaß der obere Rand des Beutels einen Ringhohlraum bildet, in dem die Schnur verrutschsicher gelagert ist.

Weitere Einzelheiten der Erfindung ergeben sich aus den Ansprüchen und den im Zusammenhang mit der Zeichnung beschriebenen Ausführungsbeispielen.

Es zeigt :

Figur 1 eine den Deckel einer Versandschachtel bildende, in Öffnungen von einem Beutel umhüllte Zwiebeln aufnehmende Halterung, wobei die Zwiebeln von gleicher Größe sind ;

Figur 2 eine auf verschieden großen Öffnungen verschieden große Zwiebeln aufnehmende Halterung, die Teil eines Gestells ist ;

Figur 3 eine von einer mit einer abgestuften Vertiefung versehenen Halterung, die in einem Rahmen gelagert ist, gehaltene, von einem Beutel umhüllte Zwiebel ;

Figur 4 eine in einen kegelstumpfförmigen Beutel geschobene Zwiebel, bevor sie in ihre Endlage gebracht wird und

Figur 5 eine Zwiebel in einem Beutel gemäß Figur 4, die sich in ihrer Endlage befindet und bei der die größere, wurzelseitige Beutelöffnung verschlossen ist.

Eine Zwiebel 1 oder Knolle ist in den oberen Teil 2 eines schlauchförmigen Beutels 3 so eingesetzt, daß ihr Sproßende 4 über den Rand 5 des Beutels 2 hinaussteht, während ihre Wurzelseite 6 auf das andere Ende 7 des Beutels 3 gerichtet ist. Dieses andere, untere Ende 7 des aus einem flexiblen, wasserdichten Material bestehenden Beutels 3 ist geschlossen, während der obere Rand 5 des Beutels, insbesondere um den Sproß 8 der Zwiebel durchtreten zu lassen, offen ist.

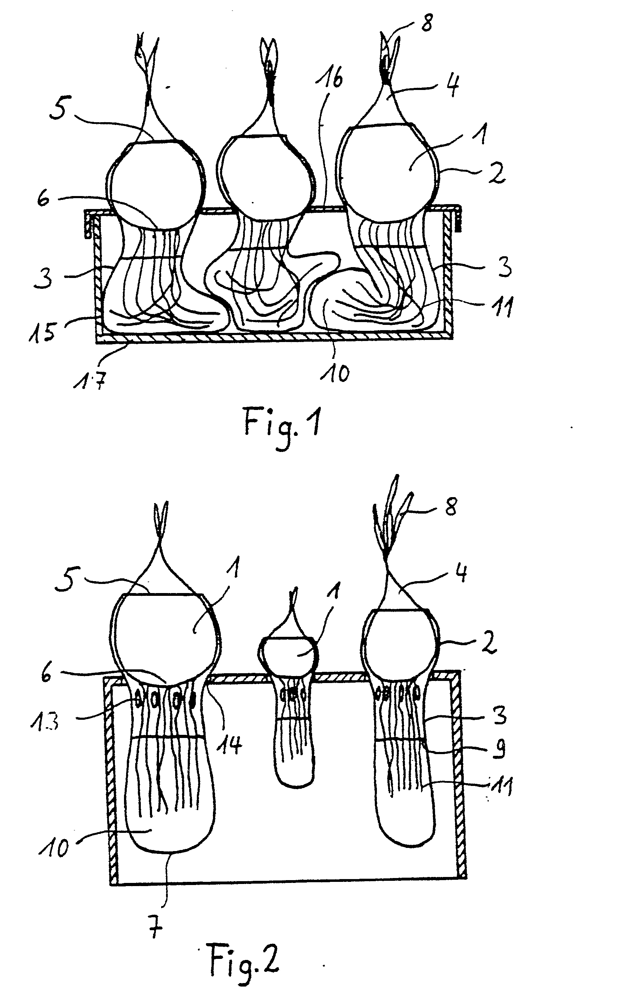

Der Beutel 3 ist bis zu einer Höhe 9 mit Wasser 10 gefüllt, in das die bereits gebildeten Wurzeln 11 hineinragen. Gemäß den Figuren 1-3 weist der schlauchförmige Beutel 3, bevor die Zwiebel 1 in ihn eingebracht wird, eine im wesentlichen zylinderförmige Gestalt auf, wobei der Umfang des Beutels 3 kleiner ist, als der maximale Umfang der Zwiebel 1 in einer zur Zwiebelachse — Sproßende/Wurzelseite — beträgt. Der Umfang des Beutels 3, der eine Zwiebel 1 mit einem Umfang von z. B. 17 cm aufnehmen soll, beträgt dabei etwa 15 cm. Der obere Teil 2 des Beutels 3 wird auf einen etwas größeren Umfang gebracht, wie der Umfang der Zwiebel 1, die dann in den oberen Teil eingeschoben wird, woraufhin sich der obere Teil aufgrund der Flexibilität des Materials wieder, soweit dies möglich ist, zusammenzieht und durch die Zwiebel 1 ausgebaucht wird.

Gemäß einer nicht dargestellten Ausführungsform ist dieser obere Teil 2 des aus einer Kunststoff-Folie bestehenden Beutels 3 mit Schlitzen versehen und wurde einem Schrumpfungsprozeß unterworfen, sodaß er netzartig ausgebildet ist. Dieser netzartig ausgebildete obere Teil 2 des Beutels 3 kann nicht nur leichter zum Einführen der Zwiebel 1 gedehnt werden, er gestattet auch darüber hinaus eine ständige Belüftung der Zwiebel.

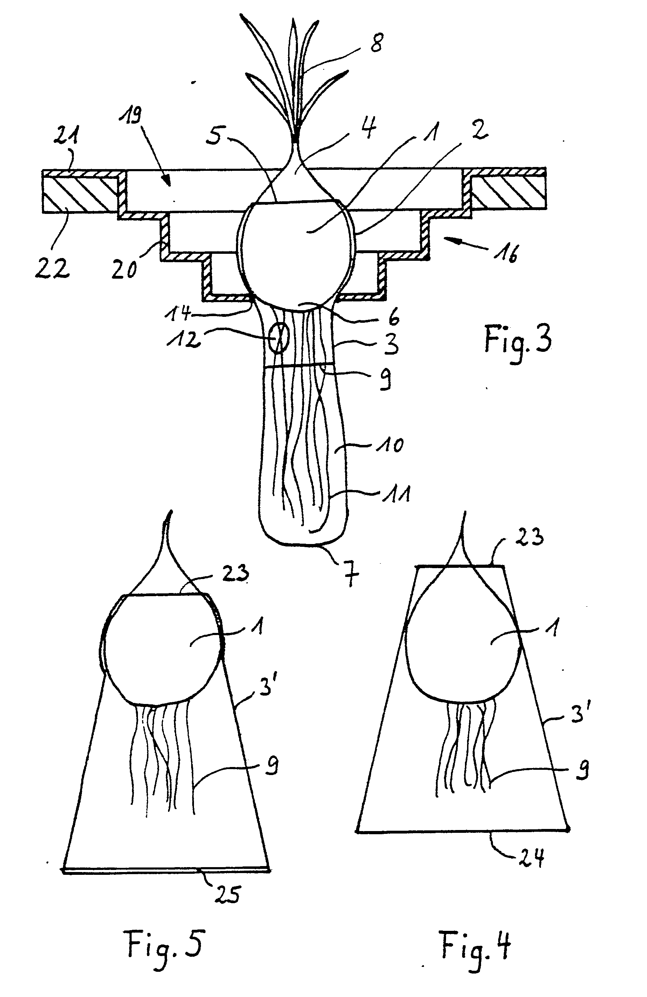

Direkt unterhalb der Zwiebel 1 weist der Beutel 3 eine Einzelöffnung 12 für Wasser auf (Figur 3). Gemäß der Ausführungsform nach Figur 2 sind unterhalb der Zwiebel in dem Beutel mehrere Belüftungsöffnungen 13 vorgesehen ; auch durch diese kann das Wasser eingefüllt werden.

Gemäß einer nicht dargestellten Ausführungsform wird der Beutel an seinem oberen Rand und im Bereich des Wurzelansatzes 6, den freien Durchtritt der Wurzeln gestattend geschnürt, wobei der die Zwiebel umhüllte Beutel an einer Schlaufe der dafür verwendeten Schnur aufgehängt werden kann.

Gemäß der Ausführungsform nach Figur 2 liegen die von den Beuteln 3 umhüllten Zwiebeln 1 in kreisförmigen Öffnungen 14 einer den Deckel einer Versandschachtel 15 bildenden Halterung 16 so auf, daß der größte Teil der Zwiebel 1 oberhalb der Halterung 16 zu liegen kommt, während der Wurzelansatz 6 der Zwiebel unterhalb der Halterung 16 in der Versandschachtel 15 angeordnet ist. Die auf der Öffnung 14 aufliegende Zwiebel 1 klemmt dabei den Beutel 3 ein, wodurch auch dann, wenn dieser mit Wasser 10 gefüllt frei durchhangt (Figur 2), dieser nicht von der Zwiebel 1 rutschen kann.

Gemäß der Ausführungsform nach Figur 1 ist die lichte Höhe zwischen dem die Halterung 16 bildenden Deckel der Schachtel und dem Boden 17 derselben viel kleiner, als die Länge des Beutels 3 unterhalb der Zwiebel 1, sodaß das untere Ende 7 des Beutels 3 nicht nur auf dem Boden 17 der Versandschachtel 15 aufliegt, sondern sich auch ein größerer Teil des Beutels 3 über diesen Boden 17 erstreckt, wie z. B. der rechte und der linke Beutel gemäß Figur 1 oder zum Teil auf benachbarten Beuteln 3 zu liegen kommt, wie der Beutel der in Figur 1 mittig dargestellten Zwiebel 1.

Das Volumen der Versandschachtel 15 ist dabei so gewählt, daß dort beim Versand von den Beuteln umhüllte Zwiebeln ausreichend Platz haben, wobei gegebenenfalls die dann wasserleeren Beutel zusammengerollt oder zusammengefaltet sind.

Gemäß der Ausführungsform nach Figur 2, bei der die Zwiebeln auf der Halterung 16 aufliegen, wird diese Halterung 16 an ihrem Rand von einer umlaufenden Abwinkelung 18 getragen. Diese hier dargestellte Halterung kann kreisförmig oder vieleckig ausgebildet sein und weist verschieden große kreisförmige Öffnungen 14 für verschieden große Zwiebeln 1 auf.

Der Durchmesser dieser die Zwiebeln 1 aufnehmenden Öffnungen 14 entspricht etwa dem 0,8- bis 0,9-fachen Durchmesser der Zwiebeln, sodaß diese auch dann, wenn sie im Laufe der Zeit etwas schrumpft, nicht durch die Öffnung hindurchfallen kann.

Nach der Ausführungsform gemäß Figur 3 wird eine Halterung 16 benutzt, die eine abgestufte Vertiefung aufweist, deren einzelne Stufen 20 abtrennbar sind. Diese einen quadratischen oder kreisförmigen Querschnitt aufweisenden Stufen 20 besitzen einen in die Vertiefung 19 hinein immer kleiner werdenden Durchmesser bzw. eine kleinere Seitenlänge, sodaß diese Halterung 16, je nachdem, welche Stufe 20 abgetrennt ist, für verschieden große Zwiebeln 1 verwendet werden kann. Die Halterung 16 liegt mit ihrem Randstreifen 21 auf einem Rahmen 22 auf, der entweder von nicht dargestellten Füßen getragen wird, oder Teil einer Pflanzen und/oder Behälter aufnehmenden Einrichtung ist, die in einer parallelen Patentanmeldung ausführlich beschrieben ist.

Während oben beschrieben wurde, daß der Beutel 3 im wesentlichen zylinderförmig ausgebildet ist, kann dieser Beutel 3', wie in den Figuren 4 und 5 dargestellt, auch im Ausgangszustand der Mantelfläche eines Kegelstumpfes entsprechen. Ein solcher Beutel 3' besitzt anfangs eine kleinere, obere Öffnung 23 und eine größere, untere Öffnung 24, in die die Zwiebel 1 mit ihrem Sproßende 4 so eingeschoben wird, daß dieses durch die kleinere Öffnung 23 hervorsteht. Nachdem die Zwiebel in diesen Schlauch hineingeschoben worden ist, wird dieser Beutel 3' an seinem, die größere, untere Öffnung 24 aufweisenden unteren Ende 7 wasserdicht zugeschweißt, wie dies in Figur 5 durch die Schweißnaht 25 dargestellt ist.

Allen hier beschriebenen Beuteln 3 ist gemeinsam, daß ihr oberer Rand 5 einen kleineren Umfang aufweist, als der größte Umfang der Zwiebel beträgt. Auf diese Art und Weise kann auch ein mit Wasser gefüllter Beutel 3 nicht von der Zwiebel herunterrutschen. Da die Zwiebel andererseits die kreisförmige Öffnung 14 der Halterung 16 nicht durchdringen kann, wird auch der mit Wasser 10 gefüllte Beutel in der Halterung 16 gehalten.

## Patentansprüche

1. Zwiebelpackung mit mindestens einer Zwiebel (6), die in das offene Ende (2) eines einseitig offenen, schlauchförmigen Beutels (3) eingesetzt ist, wobei der Beutelrand (5) am offenen Ende einen kleineren Umfang aufweist, als der maximale Umfang der Zwiebel (1) in einer zur Zwiebelachse senkrechten Ebene beträgt, die Zwiebel (1) in dem Beutel (3) so eingesetzt ist, daß ihre Wurzelseite gegen das geschlossene Ende (7) des Beutels (3) zeigt, und der Beutel (3) im größten Teil seines von der Zwiebel (1) begrenzten Volumens wasserdicht und zumindest teilweise mit Wasser gefüllt ist, während gegebenenfalls in dem Beutel (3) angeordnete Öffnungen (12, 13) in der Nähe der Zwiebel (1) angeordnet sind.

2. Zwiebelpackung nach Anspruch 1, dadurch gekennzeichnet, daß der Beutel (3) im Bereich der Zwiebel (1) und gegebenenfalls daran benachbart netzartig ausgebildet ist.

3. Zwiebelpackung nach Anspruch 1 oder 2, dadurch gekennzeichnet, daß der Beutel (3) aus einer Kunststoff-Folie besteht und im Bereich der Zwiebel (1) und gegebenenfalls daran benachbart diese Kunststoff-Folie die Öffnungen bildende Schlitze aufweist.

4. Zwiebelpackung nach einem der vorhergehenden Ansprüche, dadurch gekennzeichnet, daß der Beutel (3) unmittelbar unterhalb des Wurzelansatzes (6) mindestens eine Öffnung (12, 13) aufweist.

5. Zwiebelpackung nach einem der vorhergehenden Ansprüche, dadurch gekennzeichnet, daß der Beutel (3) durchsichtig ausgebildet ist.

6. Zwiebelpackung nach einem der vorhergehenden Ansprüche, dadurch gekennzeichnet, daß der Spiegel (9) des in dem Beutel (3) enthaltenden Wassers (10) von der Zwiebel (1) beabstandet ist.

7. Zwiebelpackung nach Anspruch 6, dadurch gekennzeichnet, daß die Wurzeln (11) in das Wasser (10) hineinragen.

8. Verpackungs- und Treibeinrichtung zur Aufnahme von Zwiebelpackungen nach einem der vorhergehenden Ansprüche, gekennzeichnet durch eine Halterung (16), in der Öffnungen (14) vorgesehen sind, deren lichte Weite kleiner ist, als der Durchmesser der Zwiebel (1).

9. Einrichtung nach Anspruch 8, dadurch gekennzeichnet, daß die Zwiebel (1) mit ihrer Wurzelseite (6) auf dem Rand der Öffnung (14) der Halterung (16) aufliegt und der Beutel (3) die Öffnung (14) der Halterung (16) durchdringt.

10. Einrichtung nach Anspruch 8 oder 9, dadurch gekennzeichnet, daß die Öffnungen (14) kreisförmig ausgebildet sind.

11. Einrichtung nach einem der Ansprüche 8 bis 10, dadurch gekennzeichnet, daß die Halterung (16) Teil eines Gestells ist und Abstützungen (18) aufweist.

12. Einrichtung nach Anspruch 11, dadurch gekennzeichnet, daß die Abstützungen (18) mindestens so hoch sind, wie der unterhalb der Halterung (16) befindliche Teil des Beutels (3).

13. Einrichtung nach einem der Ansprüche 8 bis 10, dadurch gekennzeichnet, daß die Halterung (16) den Deckel einer Versandschachtel (15) bildet.

14. Einrichtung nach einem der Ansprüche 8 bis 10, dadurch gekennzeichnet, daß die Halterung (16) den Deckel eines nach oben offenen, wasserdichten Kastens bildet.

## Claims

1. Bulb package with a least one bulb (6) which is inserted in the open end (2) of a tubular bag (3) open at one end, the rim (5) of the open end of the bag having a smaller circumference than the maximum circumference of the bulb (1) in a plane perpendicular to the axis of the bulb, the bulb (1) being inserted in to the bag (3) in such a manner that its root end points towards the closed end (7) of the bag (3) and the bag (3), over the greater part of its volume limited by the bulb (1), being watertight and at least partially filled with water, whilst openings (12, 13) are possibly provided in the bag (3) in the neighbourhood of the bulb (1).

2. Bulb package according to claim 1, characterised in that, in the region of the bulb (1) and possibly adjacent to it, the bag (3) is made of net-like form.

3. Bulb package according to claim 1 or 2, characterised in that the bag (3) is made of plastics film and in the region of the bulb (1) and possibly adjacent to it this plastics film has slits forming the openings.

4. Bulb package according to one of the foregoing claims, characterised in that the bag (3) has at least one opening (12, 13) immediately below the base (6) of the roots.

5. Bulb package according to one of the foregoing claims, characterised in that the bag (3) is made transparent.

6. Bulb package according to one of the foregoing claims, characterised in that the bulb (1) is clear of the level (9) of the water (10) in the bag (3).

7. Bulb package according to claim 6, characterised in that the roots (11) project into the water (10).

8. Packaging and growing device for receiving bulb packages according to one of the foregoing claims, characterised by a mounting (16) in which openings (14) are provided, of which the width is smaller than the diameter of the bulb (1).

9. Device according to claim 8 characterised in that the root end (6) of the bulb (1) engages the edge of the opening (14) in the mounting (16) and the bag (3) extends through the opening (14) in the mounting (16).

10. Device according to claim 8 or 9, characterised in that the openings (14) are of round shape.

11. Device according to one of claims 8 to 10, characterised in that the mounting (16) is part of a frame and has supports (18).

12. Device according to claim 11, characterised in that the supports (18) are at least as high as that part of the bag (3) which is below the mounting (16).

13. Device according to one of claims 8 to 10, characterised in that the mounting (16) forms the lid of a shipping box (15).

14. Device according to one of claim 8 to 10, characterised in that the mounting (16) forms the lid of an upwardly open watertight box.

## Revendications

1. Emballage avec bulbe comprenant au moins un bulbe (6) qui est introduit par l'extrémité ouverte (2) d'un sac (3) en forme de tuyau flexible, ouvert unilatéralement, le bord (5) du sac présentant, à l'extrémité ouverte, une périphérie plus petite que la périphérie maximale du bulbe (1) s'établissant dans un plan vertical à l'axe du bulbe, ledit bulbe (1) étant introduit dans le sac (3) de façon que son côté racines soit orienté vers l'extrémité fermée (7) du sac (3) et ledit sac (3) étant étanche à l'eau dans la plus grande partie de son volume limité par le bulbe (1) et étant rempli d'eau au moins partiellement, tandis que des ouvertures (12, 13) pratiquées le cas échéant dans le sac (3) se situent au voisinage du bulbe (1).

2. Emballage avec bulbe selon la revendication 1, caractérisé en ce que le sac (3) est réalisé à la manière d'un filet dans la zone du bulbe (1) et le cas échéant dans le voisinage de celui-ci.

3. Emballage avec bulbe selon l'une quelconque des revendications 1 et 2, caractérisé en ce que le sac (3) se compose d'une feuille de matière synthétique présente et en ce que cette feuille de matière synthétique présente des fentes formant des ouvertures dans la zone du bulbe (1) et le cas échéant dans le voisinage de celui-ci.

4. Emballage avec bulbe selon l'une quelconque des revendications 1 à 3, caractérisé en ce que le sac (3) comprend au moins une ouverture (12, 13) directement en dessous de la naissance (6) des racines.

5. Emballage avec bulbe selon l'une quelconque des revendications 1 à 4, caractérisé en ce que le sac (3) est conçu d'une manière transparente.

6. Emballage avec bulbe selon l'une quelconque des revendications 1 à 5, caractérisé en ce que le niveau (9) de l'eau (10) contenue dans le sac (3) est distant du bulbe (1).

7. Emballage avec bulbe selon la revendication 6, caractérisé en ce que les racines (11) pénètrent dans l'eau (10).

8. Dispositif de croissance et de conditionnement pour la réception de l'emballage avec bulbe selon l'une quelconque des revendications 1 à 7, caractérisé en ce qu'un élément de retenue (16), dans lequel des ouvertures (14) sont prévues, est utilisé, le diamètre des ouvertures étant plus petit que celui du bulbe (1).

9. Dispositif selon la revendication 8, caractérisé en ce que le bulbe (1) repose par son côté racines (6) sur le bord de l'ouverture (14) de l'élément de retenue (16) et en ce que le sac (3) traverse l'ouverture (14) dudit élément de retenue (16).

10. Dispositif selon l'une quelconque des revendications 8 et 9, caractérisé en ce que les ouvertures (14) sont pratiquées sous une forme circulaire.

11. Dispositif selon l'une quelconque des revendications 8 à 10, caractérisé en ce que l'élément de retenue (16) est une pièce d'une monture et présente des appuis (18).

12. Dispositif selon la revendication 11, caractérisé en ce que les appuis (18) sont au moins aussi hauts que la partie du sac (3) se trouvant en dessous de l'élément de retenue (16).

13. Dispositif selon l'une quelconque des revendications 8 à 10, caractérisé en ce que l'élément de retenue (16) forme le couvercle d'une boîte d'expédition (15).

14. Dispositif selon l'une quelconque des revendications 8 à 10, caractérisé en ce que l'élément de retenue (16) forme le couvercle d'une caisse étanche à l'eau, ouverte dans le haut.

Fig. 1

Fig. 2

Fig. 3

Fig. 5

Fig. 4